Europäisches Patentamt

European Patent Office

Office européen des brevets

(19)

(11) EP 0 830 654 B1

(12) FASCICULE DE BREVET EUROPEEN

(45) Date de publication et mention
de la délivrance du brevet:
**07.07.1999 Bulletin 1999/27**

(21) Numéro de dépôt: **96918724.4**

(22) Date de dépôt: **28.05.1996**

(51) Int Cl.⁶: **G07D 9/00**, G07F 17/32,
B65G 51/02

(86) Numéro de dépôt international:
**PCT/FR96/00798**

(87) Numéro de publication internationale:
**WO 96/38823 (05.12.1996 Gazette 1996/53)**

(54) **CONVOYEUR PNEUMATIQUE POUR PETITES PIECES METALLIQUES, NOTAMMENT DES PIECES DE MONNAIE, POUR BORNES D'ENCAISSEMENT**

PNEUMATISCHER FÖRDERER FÜR METALLISCHE KLEINTEILE, INSBESONDERE MÜNZEN, MIT MEHREREN ZAHLUNGSENDGERÄTEN

PNEUMATIC CONVEYOR FOR SMALL METALLIC PIECES, PARTICULARLY COINS, FOR PAYMENT POINTS

(84) Etats contractants désignés:
**AT BE CH DE DK ES FI FR GB GR IE IT LI LU MC NL PT SE**

(30) Priorité: **01.06.1995 FR 9506507**

(43) Date de publication de la demande:
**25.03.1998 Bulletin 1998/13**

(73) Titulaire: **SNEF Cote D'Azur (S.A.)**
**06200 Nice (FR)**

(72) Inventeur: **MAUSY, Guy**
**F-06670 Colomars (FR)**

(74) Mandataire: **Hautier, Jean-Louis**
**Cabinet Hautier**
**Office Méditerranéen de Brevets**
**d'Invention et de Marques**
**24 rue Masséna**
**06000 Nice (FR)**

(56) Documents cités:
| | |
|---|---|
| DE-A- 1 944 979 | FR-A- 2 639 336 |
| US-A- 3 759 577 | US-A- 4 078 498 |
| US-A- 4 131 318 | |

## Description

L'invention a pour objet un convoyeur pneumatique pour petites pièces métalliques, notamment des pièces de monnaie, pour bornes d'encaissement.

La borne d'encaissement peut être notamment une machine de péage d'autoroute, une borne de péage de parking, une machine à sous de salles de jeux ou tout autre appareil recevant de la monnaie et susceptible d'être vidé par une ligne de convoyage pneumatique.

L'état de la technique peut être défini par les brevets suivants :

FR-A-2.639.336 : Convoyeur du type pneumatique pour le transport d'objets solides aspirables tels que des pièces de monnaies composé d'un tube d'aspiration à la réception, d'une turbine d'aspiration, d'un tube de rejet de l'air aspiré vers l'extérieur, d'un coffre tampon situé en dessous du point de récupération normal des pièces, ledit coffre tampon ayant pour fonction de libérer par gravité les pièces de façon aléatoire ; un tube d'aspiration relie un coffre de réception à un ensemble de coffres de séparation ; à l'extrémité dudit tube sont disposés des coffres mobiles de réception, de stockage et de manutention des objets aspirables ; ledit convoyeur est caractérisé par le fait qu'il comporte un coffre qui fait office de régulateur de flux, et que l'ensemble desdits coffres de séparation fait office de sas pour séparer les objets aspirables du circuit sous dépression, ledit ensemble est disposé à l'extrémité aval du tube d'aspiration.

- FR-A-2.703.665 : Convoyeur pneumatique pour le transport d'objets solides aspirables, tels que des pièces de monnaie du type utilisant une ligne de transport pneumatique disposée entre au moins deux cuves fixes de réception et de stockage des objets solides aspirables, alimentées directement par gravité ou par un autre moyen de transfert desdits objets solides aspirables, depuis au moins une borne d'encaissement, un volume tampon où un sas maintient la dépression créée par une turbine d'aspiration tout en libérant les objets solides et au moins une machine à compter la monnaie.

Le convoyeur comporte ;

- un réceptacle mobile monté coulissant sur un chemin de roulement tel qu'un rail, de manière à pouvoir se déplacer sous les cuves fixes de réception et de stockage,
- ledit réceptacle est relié à la ligne de transport pneumatique au moyen d'un tuyau souple, et
- chaque cuve fixe est équipée d'une trappe manoeuvrable manuellement ou à distance par un moyen de commande.

Ces brevets décrivent essentiellement un dispositif de transport utilisant une ligne par borne d'encaissement et une évacuation en continue. Le dispositif d'introduction dans la borne d'encaissement est réduit à un entonnoir destiné à introduire les pièces dans le tube.

Ce mode de réalisation présente l'inconvénient d'être coûteux à l'installation par le nombre important de tubes nécessaires, et à l'exploitation car les lignes ne sont utilisées qu'à un faible pourcentage de leur capacité.

- US-A-4,131.318 : appareil pour collecter les pièces comportant une chambre de réception et un système d'aspiration pour permettre l'aspiration vers la chambre de réception. Une pluralité de trous internes sont disposés sur la paroi supérieure de cette chambre, et un conduit connecte chaque trou interne à une source de pièces séparée et éloignée. Chaque bouchon, situé au niveau de chaque trou interne a une forme supérieure inclinée qui, en position de fermeture permet de bloquer individuellement chaque trou interne. Un solénoïde est solidaire de chaque bouchon pour faire bouger le bouchon à l'encontre de la force qui le maintient fermé afin de permettre la communication entre le conduit et la chambre de réception. Des mécanismes activent périodiquement le moyen d'aspiration et les solénoïdes.

Dans ce brevet, chaque borne d'encaissement est équipée d'un dispositif d'introduction relié chacun par une ligne à l'appareil d'aspiration et de recueil de pièces.

- US-A-3.759.577 ; des pièces déposées dans des unités de réception de pièces de machines à pièces tombent dans des tuyaux distributeurs communiquant avec les unités de réception et une surface de collecte à distance. Le liquide parcourt continuellement et périodiquement les tuyaux et achemine les pièces à travers les tuyaux et jusqu'à la surface de réception où les pièces sont séparées du liquide.

Cet appareil n'aspire pas des objets dans une conduite. Au contraire, il pousse en soufflant et en injectant de l'eau. Les conduites ne peuvent être disposées qu'en pente douce ou au même niveau.

- US-A-4.078.498 : un système de transport pneumatique à basse pression pour bouger un véhicule ou des objets le long d'un conduit ayant deux extrémités sans porte soumis à la pression atmosphérique. Au voisinage de l'extrémité d'entrée du conduit plusieurs orifices en forme de fente à effet Coanda sont présents au niveau de la cloison du conduit. Un tuyau connecte les orifices à des moyens de soufflement et fournit de l'air aux orifices.

L'essentiel de cette invention réside dans l'utilisation de l'effet Coanda. L'appareil agit en poussant les pièces et non en les aspirant.

- DE-A-1.944.979 : l'invention a pour objet un dispositif d'arrêt et de freinage pour installation à tubes pneumatiques avec une extraction par aspiration.

La tâche de l'invention présentée est de produire un dispositif capable de freiner de façon simple, sûre et sans générer de bruit, une boîte de transport arrivant à grande vitesse. Le même dispositif doit aussi pouvoir être utilisé pour retenir une boîte de transport à un endroit déterminé pendant le temps souhaité.

Cette tâche est réalisée par l'invention avec le remplacement du conduit par un tuyau épais de matière élastique, en caoutchouc de préférence. Ce tuyau présente au repos la même section que le conduit et est bâti dans une cavité étanche pouvant être au choix mise en communication avec le conduit ou la pression atmosphérique extérieure. Quand le tuyau est à la pression extérieure, sa section diminue par l'effet de dépression et contrarie le passage de la boîte de transport, diminuant sa vitesse ou le cas échéant, la stoppant.

Le but essentiel de ce dispositif est de ralentir ou de stopper les boîtes arrivant à grande vitesse. Une dérivation est réalisée à cet effet pour ne pas interrompre la circulation de l'air.

Le but visé dans l'invention est totalement différent. La vanne selon l'invention SNEF est utilisée non pas pour freiner ou pour bloquer le passage mais comme vanne étanche. Elle s'ouvre uniquement pour le passage de la pièce et se referme aussitôt pour éviter les pertes de charge. En effet, l'invention réside également dans le fait qu'une ou plusieurs bornes d'encaissement sont connectées sur une même ligne principale.

Le mode de réalisation, selon l'invention, s'applique notamment aux bornes d'encaissement du type machines automatiques de jeux.

Actuellement, dans les établissements où des machines à sous sont autorisées, les transferts de fond s'effectuent de la manière suivante : les machines à sous sont montées sur des socles dans lesquels sont mis en place des seaux sous l'orifice de sortie des pièces des machines à sous. Périodiquement, des employés viennent relever les seaux pleins et les remplacer par des seaux vides. Chaque machine à sous peut récupérer entre 1000 et 3500 pièces par jour, soit entre 15 et 30 Kg par jour. Cette manipulation des pièces est donc onéreuse en main d'oeuvre sans compter les risques "d'évaporation" des recettes.

Pour cette application, le convoyeur pneumatique est donc particulièrement adapté.

Le convoyeur pneumatique pour petites pièces métalliques, notamment des pièces de monnaie pour bornes d'encaissement, est du type utilisant une ou plusieurs lignes, dans lequel est créée une dépression par une ou plusieurs turbines d'aspiration, chaque ligne récupère, à une extrémité, les pièces issues d'une borne d'encaissement et à l'autre extrémité aboutit à un moyen faisant office de séparateur (air/pièces) relié à une turbine d'aspiration et une cuve de stockage, caractérisé par le fait que :

- plusieurs bornes d'encaissement sont connectées sur une même ligne principale,
- chaque borne d'encaissement est équipée d'un dispositif d'introduction avec ouverture et fermeture étanche à chaque passage de pièces dans la ligne principale,
- une ou plusieurs lignes principales sont connectées à chaque moyen faisant office de séparateur (air/pièces),
- chaque ligne est un tube dont le diamètre est défini en fonction du diamètre des pièces à convoyer pneumatiquement et ce, de manière à rendre instable la position dans le tube d'une pièce de monnaie qui se trouve momentanément à l'arrêt pour favoriser son oscillation.

Le dispositif d'introduction est composé :

- d'un capteur de pièces qui fait office de moyen de comptage et de moyen de commande d'une vanne avec ouverture et fermeture étanche,
- d'une vanne avec ouverture et fermeture étanche de la ligne uniquement durant le passage de la pièce,
- d'un moyen de sécurité qui est actionné lors d'un dysfonctionnement dudit dispositif d'introduction pour dégager, par rotation, l'extrémité de la ligne de l'orifice de sortie des pièces de la borne d'encaissement.

La vanne avec ouverture et fermeture étanche est une vanne à manchon emmanchée coaxialement sur la ligne. L'élément obturateur est constitué d'un manchon souple qui, sous l'effet d'une faible pression périphérique, se referme pour obturer complètement le passage dans la ligne sous-jacente en dépression, pour l'ouverture, une pression équivalente négative est appliquée à la membrane ou manchon souple.

La vanne est constituée d'un corps présentant une chambre intérieure. La membrane tubulaire ou manchon souple traverse cette chambre. Un orifice est aménagé dans la partie centrale du corps pour l'alimentation en air de commande, par l'intermédiaire d'une vanne à trois voies.

Le moyen de sécurité qui est actionné lors d'un dysfonctionnement dudit dispositif d'introduction est composé d'un moyen de manoeuvre qui déplace l'extrémité de la ligne pour la dégager de l'orifice de sortie des pièces de la borne d'encaissement.

Le moyen de manoeuvre est un moteur électrique. Ce mode de réalisation est non représenté et non décrit.

Le moyen de manoeuvre est la combinaison d'une ventouse électromagnétique et d'un ressort prétendu.

Le moyen de sécurité du dispositif d'introduction est constitué d'un tube doublement cintré dont les deux extrémités sont parallèles mais décalées, une des extrémités aval s'introduit dans la vanne à manchon et y pivote librement. L'autre extrémité amont est positionnée directement sous l'orifice d'éjection de la borne d'encaissement. Une ventouse électromagnétique maintient l'extrémité sous l'orifice de ladite borne et ce, à l'encontre d'un ressort pré-tendu ; sous tension ladite ventouse est collée sur sa plaque de fermeture de champ ; hors tension, ledit ressort fait pivoter le tube laissant tomber les pièces par gravité dans un coffre de secours directement situé sous le tube. L'alimentation de ladite vanne est commandée par un détecteur d'anomalie.

Selon un autre mode de réalisation, le moyen de sécurité est assuré par un ensemble de stockage et de comptage constitué de deux éléments principaux, un bol de stockage et une trémie de comptage et d'éjection des pièces. En action, selon ce mode de sécurité l'un des deux éléments peut pivoter par rapport à l'autre de manière à permettre l'évacuation des pièces d'un ensemble de stockage ou de comptage vers un coffre de secours.

Selon un mode de réalisation préféré, la trémie qui fait office d'élément de comptage peut pivoter autour d'un axe sous l'action de son propre poids et d'un ressort de traction. Un électro-aimant assure le maintien de la fermeture, tant que la tension est maintenue sur chacune de ses bornes. Un moyen faisant office de détecteur de niveau vérifie la saturation du bol de stockage.

Selon un mode de réalisation préféré, les lignes principales sont des tubes en polyéthylène haute densité. Le diamètre (A) du tube est fonction du diamètre (B) de la pièce métallique à transporter, à savoir :

$$1,3\ B < A < 2,3\ B$$

Le tube a un diamètre environ deux fois plus grand que le diamètre de la pièce métallique.

Selon un mode de réalisation préféré, le diamètre du tube est 1,7 à 1,8 fois plus grand que le diamètre de la pièce métallique.

Selon un mode de réalisation, le débit d'air est compris entre 8 et 16 mètres/seconde.

Le moyen faisant office de séparateur air/pièces, qui est relié à une turbine d'aspiration et une cuve de stockage, est équipé d'un volume tampon qui assure la séparation des pièces et de l'air en dépression.

Le volume tampon a une forme de cône inversé, la grande base recevant ainsi, par cette partie supérieure, une ligne d'aspiration reliée à la turbine aspirante et une ou plusieurs lignes principales de transport des pièces. La sortie de la ligne principale conduit les pièces, qui tombent par gravité et qui sont amorties par la paroi du volume tampon, dans un moyen faisant office de sas pour quitter ce volume tampon sous dépression et par un conduit, ces pièces tombent dans une cuve de stockage.

La paroi conique est constituée d'une coque en polyéthylène haute densité qui, par ses propriétés d'amortissement et d'anti-abrasion, freine les pièces et les conduit dans le moyen faisant office de sas. Ce moyen faisant office de sas n'est pas décrit.

Selon un mode de réalisation préféré, la ligne d'aspiration, reliée directement à la turbine, arrive au centre du volume tampon tandis que, les lignes principales sont disposées de manière circulaire autour dudit conduit d'aspiration. Le débit de la ligne d'aspiration est ainsi réparti uniformément entre les lignes principales.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue schématique de l'ensemble du convoyeur pneumatique pour petites pièces notamment des pièces de monnaie pour bornes d'encaissement, elle met notamment en évidence que plusieurs bornes d'encaissement sont connectées sur une même ligne principale.

La figure 2 est une vue d'ensemble du dispositif d'introduction composé d'un capteur de pièces, d'une vanne avec ouverture et fermeture, d'un raccord en Y, d'un moyen de sécurité prévu pour dégager, par rotation, l'extrémité de la ligne de l'orifice de sortie des pièces de la borne d'encaissement.

La figure 3 est une vue de dessus selon la figure 2 où l'extrémité de la ligne est sous l'orifice de sortie des pièces de la borne d'encaissement.

La figure 4 est vue selon la figure 3 mais où le moyen de sécurité a dégagé, par rotation, l'extrémité de la ligne de l'orifice de sortie des pièces de la borne d'encaissement.

La figure 5 est une vue schématique du dispositif d'introduction mettant en évidence l'adaptabilité aisée par rapport à la position d'orifice d'éjection des pièces de la borne d'encaissement.

La figure 6 est une vue de la vanne à manchon en position de repos.

La figure 7 est une vue de la vanne à manchon en position ouverte, la chambre est mise en dépression. La membrane tubulaire s'élargit pour laisser un passage libre au transport pneumatique de la ligne.

La figure 8 est une vue de la vanne à manchon en position fermée, la chambre est mise en surpression.

La figure 9 est une vue en coupe selon l'axe X-X représenté à la figure 8, elle met en évidence le pincement de la membrane qui obstrue la ligne de transport pneumatique.

Les figures 10, 11 et 12 mettent en évidence la relation entre le diamètre du tube et le diamètre de la pièce pour qu'à l'arrêt, la pièce soit proche d'un équilibre instable.

La figure 13 est une vue en perspective du moyen faisant office de séparateur air/pièce et du coffre de stockage des pièces.

La figure 14 est une vue schématique vu en coupe longitudinale du séparateur représenté à la figure 13.

La figure 15 est une vue de dessus du séparateur mettant en évidence la position des arrivées des lignes principales et de la ligne d'aspiration directement reliée à la turbine.

La figure 16 est une vue d'ensemble d'un autre mode de réalisation du moyen d'introduction qui comporte un ensemble de stockage comptage.

La figure 17 est une vue en détail de l'ensemble de stockage et de comptage en position de fonctionnement.

La figure 18 est une vue en détail de l'ensemble de stockage et de comptage en position de secours, c'est-à-dire lorque le moyen de sécurité a été actionné.

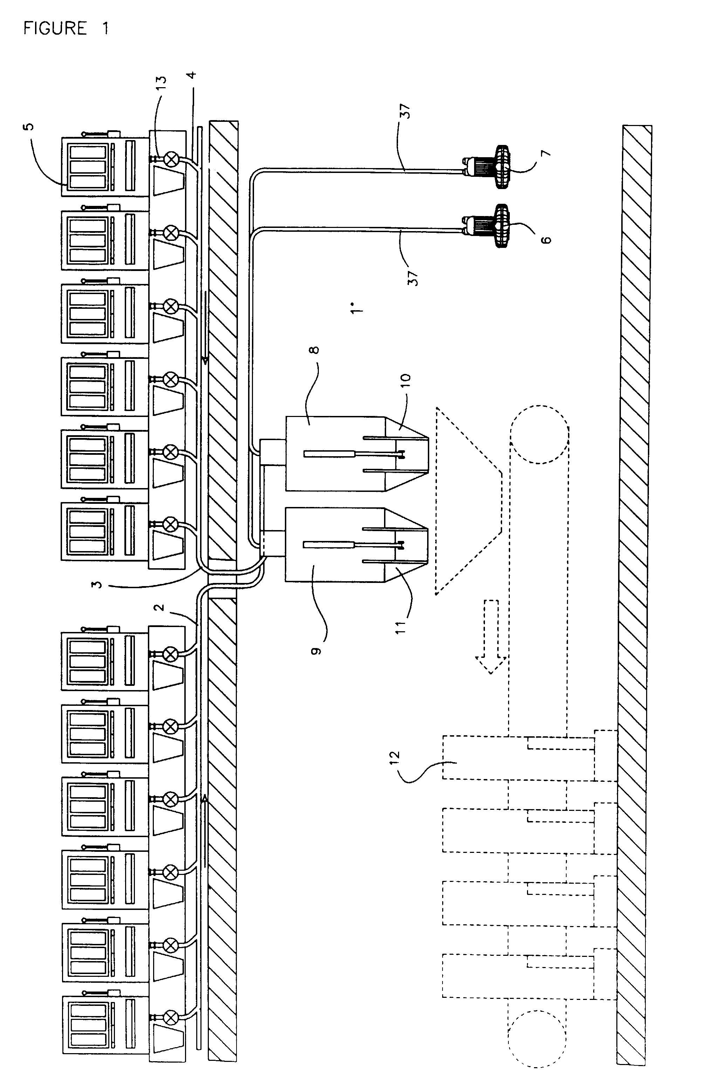

Le convoyeur 1 est représenté à la figure 1.

Dans la figure 1, le convoyeur 1 utilise deux lignes principales 2 et 3 qui sont reliées, par des dérivations en Y 4, à des bornes d'encaissement 5. Plusieurs bornes d'encaissement 5 sont donc reliées à une seule ligne principale 2 ou 3.

Dans le mode de réalisation représenté à la figure 1, les bornes d'encaissement 5 sont des machines à sous.

La dépression est créée par deux turbines d'aspiration 6 et 7. Chaque turbine d'aspiration crée le vide dans une ligne principale 2 ou 3.

La turbine d'aspiration 6 fait le vide dans la ligne principale 2. La turbine d'aspiration 7 fait le vide dans la ligne principale 3. Chaque ligne principale aboutit à un moyen faisant office de séparateur air/pièces. La ligne principale 2 aboutit à un séparateur air/pièces 8. La ligne principale 3 aboutit à un séparateur air/pièces 9. Sous le séparateur air/pièces 8 se trouve une cuve de stockage 10. Sous le séparateur air/pièces 9 se trouve une cuve de stockage 11. Sous les cuves de stockage 10 et 11 sont représentés, en pointillés, les différents organes 12 qui permettent de traiter les différentes pièces et de gérer, sur le plan comptable, les pièces.

Chaque borne d'encaissement 5 est équipée d'un dispositif d'introduction 13 avec ouverture et fermeture étanche à chaque passage des pièces dans la ligne principale 2 ou 3, auquel le dispositif d'introduction est raccordé par une dérivation en Y 4.

Chaque ligne 2 ou 3 est un tube dont le diamètre A est fonction du diamètre B des pièces 31 à convoyer pneumatiquement et ce, de manière à rendre instable la position dans le tube de la ligne d'une pièce 31 qui se trouve momentanément à l'arrêt pour favoriser son oscillation.

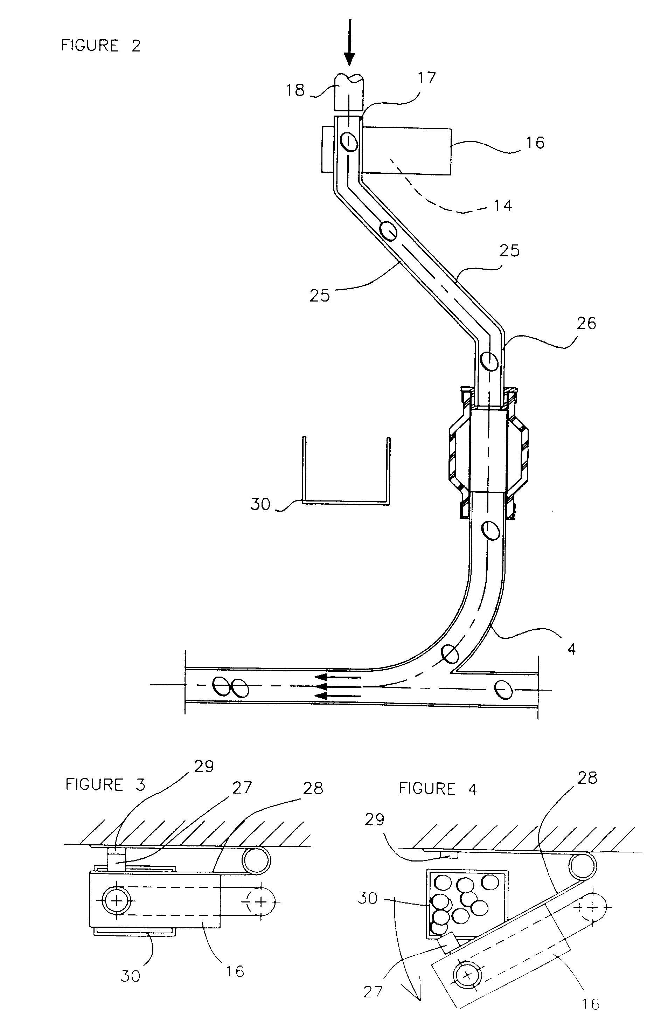

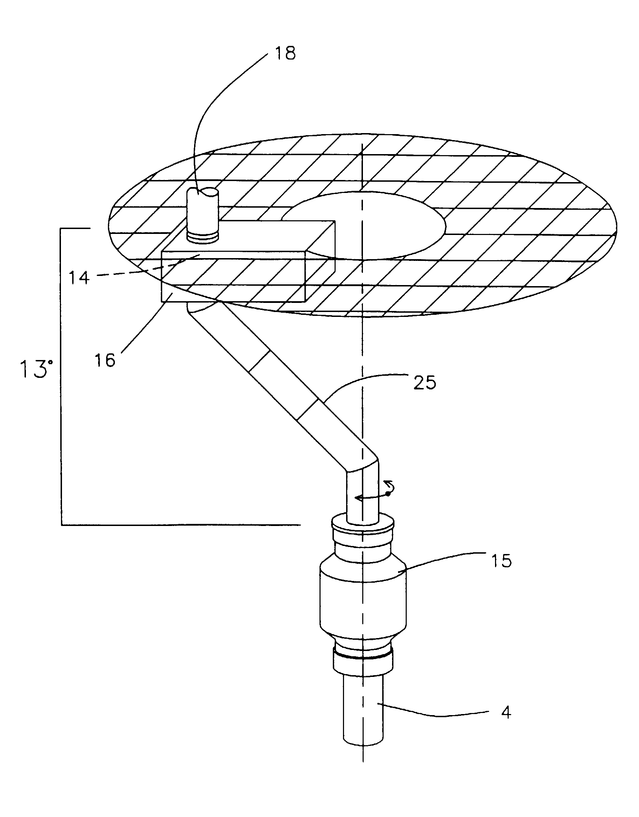

Le dispositif d'introduction 13 est plus particulièrement représenté dans les figures 2,3,4 et 5 sur la planche 2 et sur la planche 3.

Le dispositif d'introduction 13 est composé :

- d'un capteur de pièces 14 (non représenté sur les figures) qui fait office de moyen de comptage et de moyen de commande d'une vanne à manchon 15 avec ouverture et fermeture étanche de la ligne, uniquement durant le passage de la pièce 31.
- d'un moyen de sécurité 16 qui est actionné lors d'un dysfonctionnement dudit dispositif d'introduction 13 pour dégager, par rotation, l'extrémité 17 amont de la dérivation en Y 4 de la ligne. Cette extrémité 17 est dégagée de l'orifice 18 de sortie des pièces de la borne d'encaissement 5.

La vanne 15 avec ouverture et fermeture étanche est une vanne à manchon 15 emmanchée coaxialement sur la ligne de dérivation 4 en Y. L'élément obturateur est constitué d'un manchon souple qui, sous l'effet d'une faible pression périphérique, se referme pour obturer complètement le passage dans la ligne sous-jacente en dépression ; pour l'ouverture, une pression équivalente négative est appliquée à la membrane ou manchon souple 19.

La vanne à manchon 15 est constituée d'un corps 20 présentant une chambre intérieure 21. La membrane tubulaire ou manchon souple 19 traverse cette chambre intérieure 21.

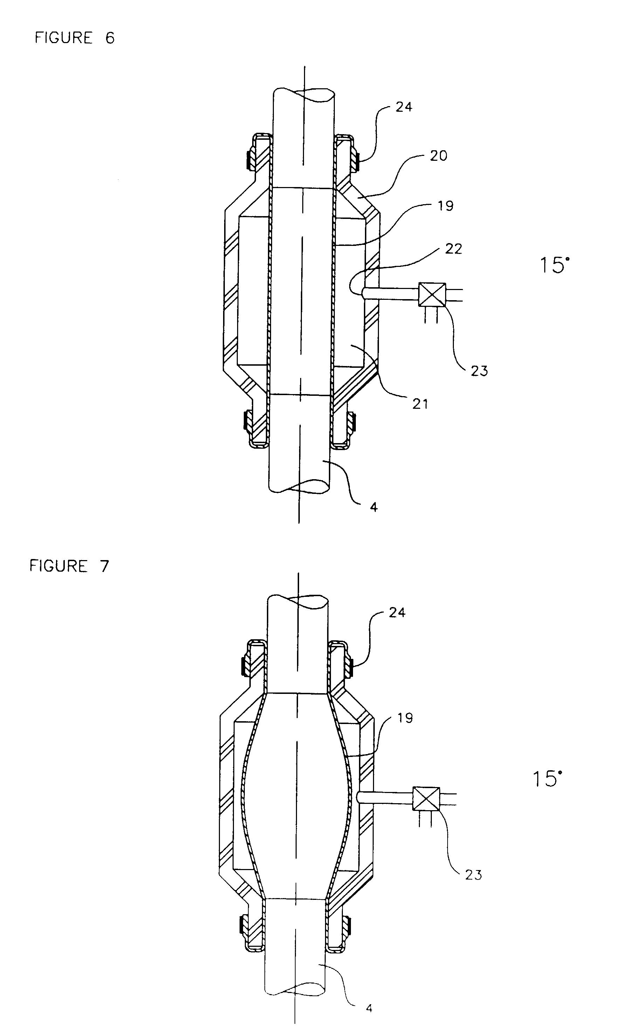

Un orifice 22 est aménagé dans la partie centrale du corps 20 pour l'alimentation en air de commande, par l'intermédiaire d'une vanne à trois voies 23. A la figure 6, la vanne à manchon 15 est représentée en position repos sans alimentation en air.

La membrane tubulaire 19, en caoutchouc naturel ou synthétique, traverse la chambre intérieure 21. La membrane souple 19 possède des bourrelets à chacune de ses extrémités, bourrelets, qui, après retournement sur le corps 20, reçoivent des colliers de serrage 24 qui assurent l'étanchéité entre la membrane souple ou membrane tubulaire 19 et le corps 20 de la vanne.

Comme représenté à la figure 7, la chambre intérieure 21 est mise en dépression par basculement de la vanne 23, la membrane tubulaire 19 s'élargit pour laisser un passage libre au transport pneumatique dans la ligne 4.

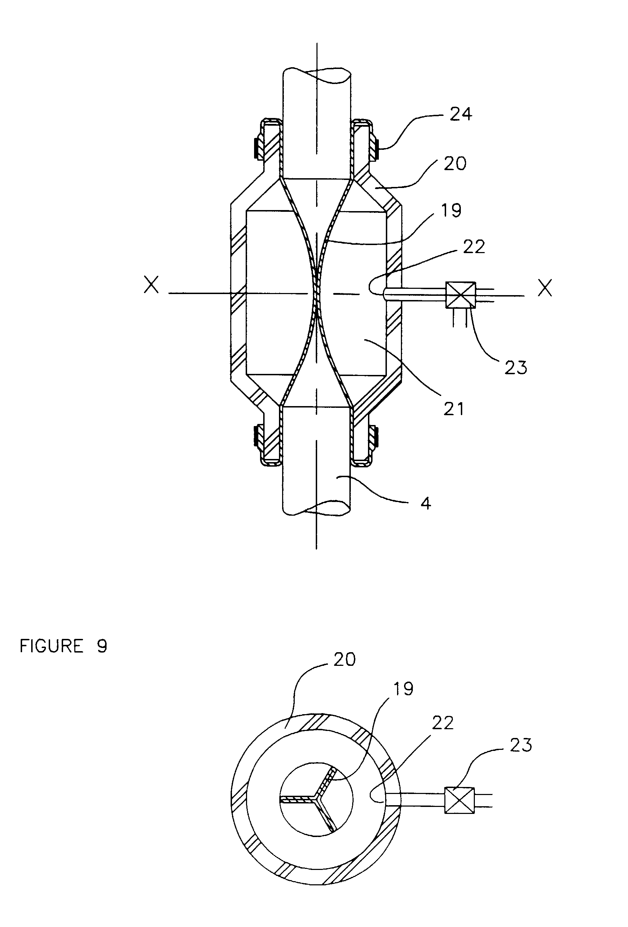

En position fermée, telle que représentée à la figure 8, la chambre intérieure 21 est mise en surpression par basculement de la vanne 23, vanne de commande à trois voies.

Le manchon souple ou membrane tubulaire 19 est pincé, il obstrue la ligne de transport pneumatique 4.

La figure 9 représente la position en "trèfle" adoptée par le manchon souple ou membrane tubulaire 19 en position fermée.

Le moyen de sécurité 16 du dispositif d'introduction 13 est constitué d'un tube doublement cintré 25 dont les deux extrémités 17 et 26 sont parallèles mais décalées. Une des extrémités, l'extrémité 26, s'introduit dans la vanne à manchon 15 et y pivote librement.

L'autre extrémité 17 est positionnée directement sous l'orifice d'éjection 18 de la borne d'encaissement 5.

Une ventouse électro-magnétique 27 maintient l'extrémité 17 sous l'orifice 18 de ladite borne 5 et ce, à l'encontre d'un ressort pré-tendu 28. Sous tension, ladite ventouse électro-magnétique 27 est collée sur sa plaque de fermeture de champ 29. Hors tension, ledit ressort 28 fait pivoter l'extrémité 17 du tube laissant ainsi tomber les pièces par gravité dans un coffre de secours 30 directement situé sous l'orifice 18 et à son aplomb.

L'alimentation de la ventouse électro-magnétique 27 est commandée par un détecteur d'anomalies, non représenté sur les figures. Ledit détecteur doit être à même de capter un défaut au niveau de la dépression, un défaut au niveau de la circulation des pièces dans la ligne, un bourrage etc.

Dans ces conditions, en cas d'arrêt ou d'anomalies de convoyeur, le moyen de sécurité 16 permet de fonctionner en mode secours, c'est-à-dire que les pièces sont dérivées directement de l'orifice 18 de sortie des pièces de la borne d'encaissement 5 vers le coffre de secours 30.

Selon un mode de réalisation préféré, les lignes principales 2, 3 ainsi que les dérivations en Y 4 sont réalisées dans des tubes en polyéthylène haute densité.

Le diamètre A du tube est fonction du diamètre B de la pièce de monnaie à transporter, à savoir 1,3 B < A < 2,3 B. Ainsi le tube ou ligne 2 ou 3 à un diamètre d'environ deux fois plus grand que le diamètre B de la pièce 31.

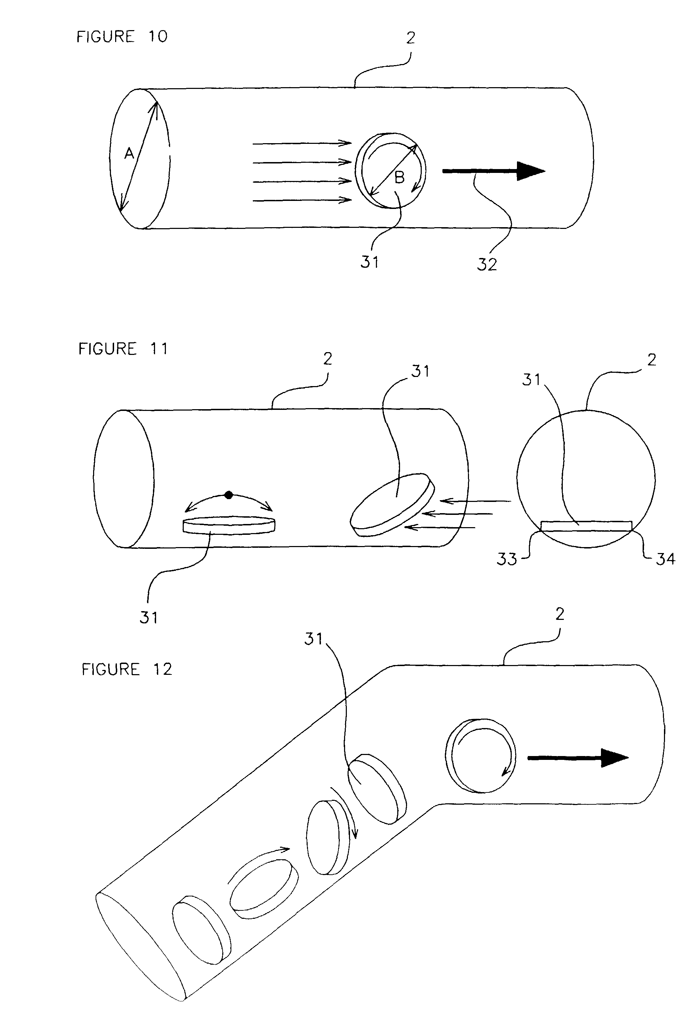

Comme représenté à la figure 10, la pièce 31 roule normalement selon la flèche indiquée 32, dans le tube 2. Si la pièce 31 vient à s'arrêter et à se coucher dans le tube 2, par exemple par coupure du débit, cette pièce n'est en contact avec le tube 2 que par deux points 33 et 34. Le contact est donc très faible entre la pièce 31 et les parois du tube. Dès que la dépression est rétablie sur la ligne, la moindre perturbation fait aussitôt osciller ladite pièce 31 dans le sens du flux, voir les flèches.

Cette pièce 31 présente alors un maitre-couple suffisant pour se trouver à nouveau propulsée par le débit d'air, si celui-ci est compris dans les valeurs précédemment décrites par l'invention et ce, de manière à pouvoir propulser ladite pièce 31.

Selon la présente invention, le débit d'air est compris entre 8 et 16 mètres/seconde.

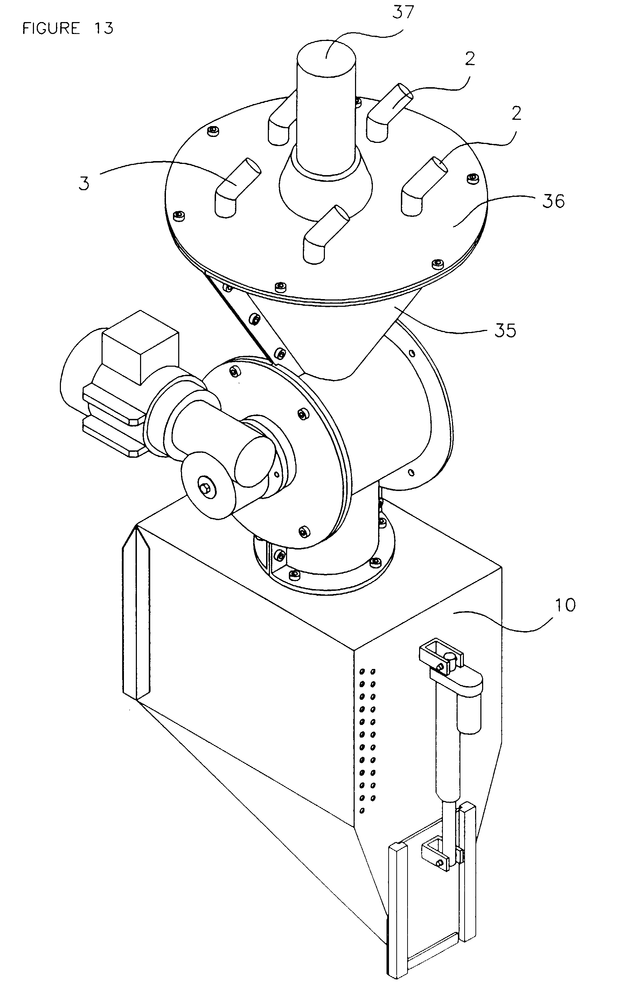

Le moyen faisant office de séparateur air/pièces 8 ou 9 est représenté à la figure 13. Il est relié à une turbine d'aspiration 7 et à une cuve de stockage 10.

Ladite cuve de stockage est équipée d'un volume tampon 35. Le volume tampon 35 a une forme de cône inversé, la grande base 36 recevant, en son centre, une ligne d'aspiration 37 reliée à la turbine aspirante 6 et, les arrivées de plusieurs lignes principales de convoyage réparties de façon circulaire autour de l'orifice d'aspiration. Le débit de la ligne d'aspiration 37 est ainsi réparti uniformément entre les lignes principales.

La sortie du volume tampon 35 conduit les pièces 31 qui tombent par gravité et qui sont amorties par la paroi du volume tampon 35 dans une cuve de stockage 10.

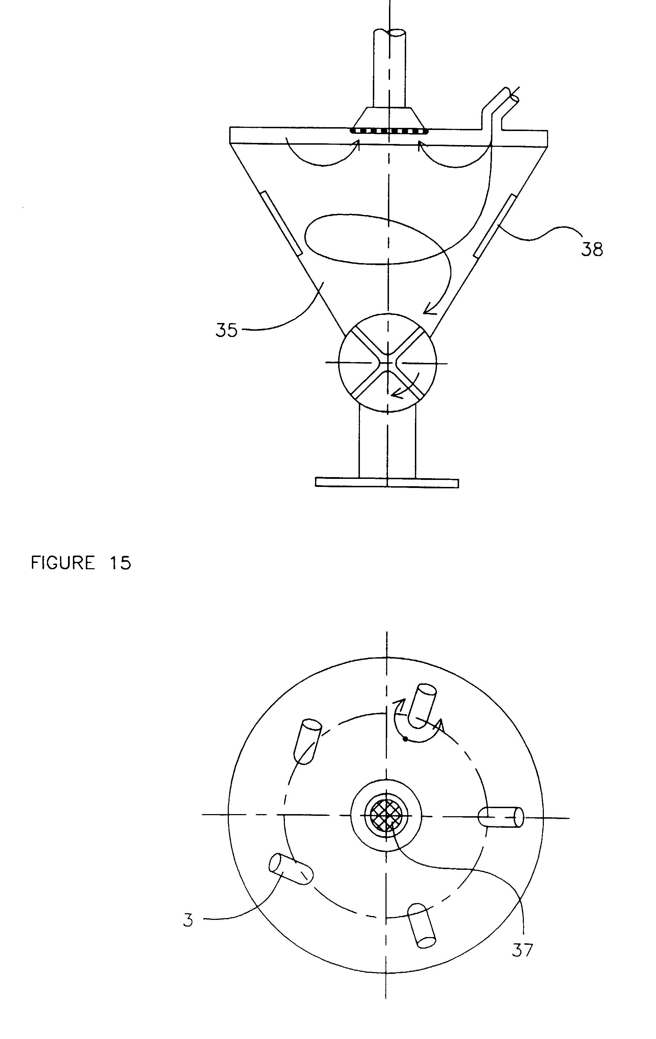

Les figures 14 et 15 représentent l'arrivée de la ligne d'aspiration et des lignes principales dans le volume tampon 35. Elles mettent également en évidence, par les flèches, le flux d'air aspiré et le parcours des pièces qui sont amorties par la paroi du volume tampon 35, par des bandes d'absorption 38 disposées sur la paroi intérieure dudit volume tampon 35.

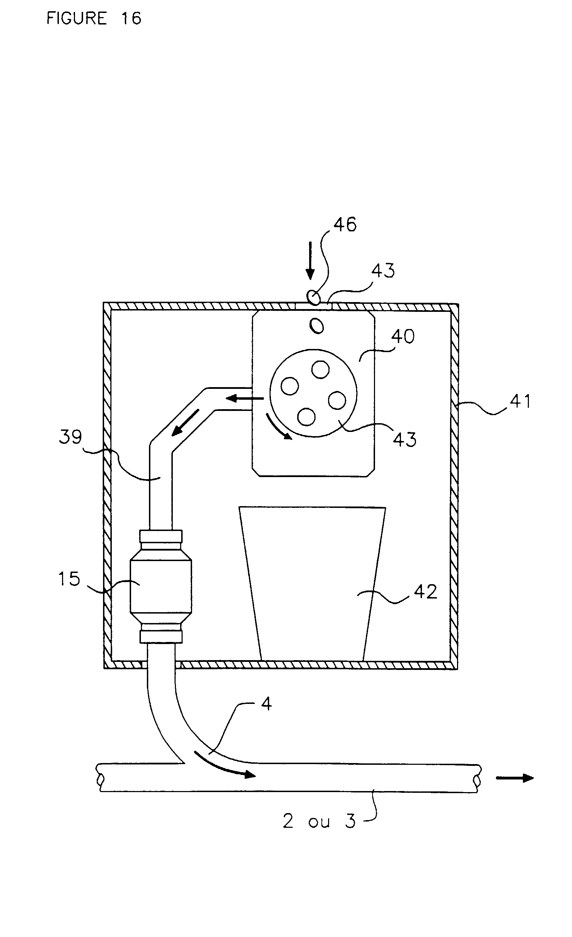

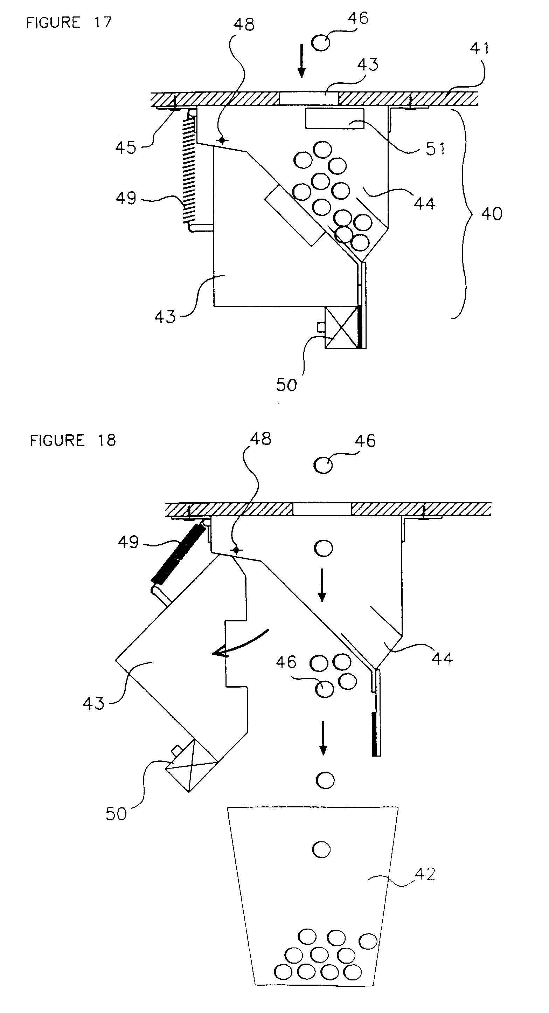

Dans le mode de réalisation représenté dans les figures 16, 17, 18, le moyen de sécurité se compose d'une ligne de convoyage 2 ou 3 connectée par une dérivation en Y 4 à une vanne à manchon 15, un tube de liaison 39 et un ensemble de stockage/comptage 40.

Cet ensemble est fixé dans un socle 41 de machine à sous. Un seau 42 faisant office de coffre de secours, est disposé sous l'ensemble de stockage/comptage 40.

Les pièces 46 constituant la recette du casino pénètrent par gravité dans l'ensemble de stockage/comptage 40 par un orifice 43 du socle 41.

Les pièces s'accumulent dans l'ensemble de stockage/comptage 40. A un certain moment, la trémie 43 de l'ensemble stockage/comptage 40 se met en mouvement, effectue le comptage des pièces stockées, et les éjecte dans le tube de liaison 39.

Simultanément, la vanne 15 s'ouvre, et les pièces parviennent dans la ligne 2 ou 3 du transport pneumatique. Quand l'ensemble de stockage/comptage 40 est vide, la trémie 43 s'arrête, et un nouveau cycle de remplissage peut débuter.

Vue de profil, l'ensemble de stockage/comptage 40 est constitué de deux éléments principaux : d'un bol 44 de stockage, d'une trémie 43 de comptage et d'éjection des pièces.

Le bol 44 est fixé au socle 41 par vissage 45. Les pièces 46 passant à travers l'orifice 47 remplissent le bol 44.

La trémie 43 peut pivoter autour d'un axe 48 sous l'action de son propre poids et d'un ressort de traction 49. Un électro-aimant 50 assure le maintien de la fermeture, tant que la tension est maintenue sur chacune de ses bornes.

Un détecteur de niveau 51 vérifie la saturation du bol 44.

En cas de coupure de la tension aux bornes de l'électro-aimant 50, la trémie 43 pivote autour de l'axe 48, les pièces 46 présentes dans le bol 44 tombent dans le seau 42.

La machine à sous peut continuer à fonctionner sur coffre secours 42.

REFERENCES

1.  Convoyeur
2.  Lignes principales
3.  Lignes principales
4.  Dérivation en Y
5.  Machines à sous ou bornes d'encaissement
6.  Turbine d'aspiration
7.  Turbine d'aspiration
8.  Séparateur air/Pièces
9.  Séparateur air/Pièces
10. 11. Cuve de stockage
12. Organes de traitement et de gestion des pièces
13. Dispositif d'introduction
14. Capteur de pièces
15. Vanne à manchon
16. Moyen de sécurité
17. Extrémité amont de la dérivation en Y de la ligne 4
18. Orifice de sortie des pièces de la borne d'encaissement
19. Manchon souple ou membrane tubulaire
20. Corps de la vanne
21. Chambre intérieure
22. Orifice
23. Vanne de commande à trois voies
24. Collier de serrage du manchon souple
25. Tube doublement cintré
26. Extrémité aval du tube doublement cintré
27. Ventouse électro-magnétique
28. Ressort pré-tendu
29. Plaque de fermeture de champ
30. Coffre de secours
31. Pièce métallique
32. Flèche
33. 34. Points de contact pièce/tube de la ligne
35. Volume tampon
36. Partie supérieure grande base du volume tampon
37. Ligne d'aspiration
38. Bandes d'absorption
39. Tube de liaison
40. Ensemble de stockage/comptage
41. Socle
42. Coffre de secours ou seau
43. Trémie
44. Bol de stockage
45. Vissage
46. Pièces
47. Orifices
48. Axe
49. Ressort de traction
50. Electro-aimant
51. Détecteur de niveau
A.  Diamètre du tube
B.  Diamètre d'une pièce

**Revendications**

1.  Convoyeur pneumatique (1) pour petites pièces métalliques (31), notamment des pièces de monnaie pour bornes d'encaissement, du type utilisant une ou plusieurs lignes, dans lequel est créée une dépression par une ou plusieurs turbines d'aspiration (6,7), chaque ligne récupère, à une extrémité, les pièces (31) issues d'une borne d'encaissement (5) et à l'autre extrémité aboutit à un moyen faisant office de séparateur (air/pièces) (8,9) relié à une turbine d'aspiration (6,7) et une cuve de stockage (10,11), caractérisé par le fait

    qu'une même ligne principale (2,3) regroupe plusieurs bornes d'encaissement (5),

    - chaque borne d'encaissement (5) est équipée d'un dispositif d'introduction (13) avec ouverture et fermeture étanche à chaque passage de pièces (31) dans la ligne principale (2,3),
    - chaque ligne (2,3) est un tube dont le diamètre (A) est défini en fonction du diamètre (B) des pièces (31) à convoyer pneumatiquement et ce, de manière à rendre instable la position dans le tube d'une pièce de monnaie (31) qui se trouve momentanément à l'arrêt pour favoriser son oscillation.

2.  Convoyeur pneumatique (1) selon la revendication 1 caractérisé par le fait

    que le dispositif d'introduction (13) est composé :

    - d'un capteur (14) de pièces qui fait office de moyen de comptage et de moyen de commande d'une vanne (15) avec ouverture et fermeture étanche,
    - d'une vanne (15) avec ouverture et fermeture étanche de la ligne uniquement durant le passage de la pièce (31),
    - d'un moyen de sécurité (16) qui est actionné lors d'un dysfonctionnement dudit dispositif d'introduction (13) pour dégager, par rotation, l'extrémité de la ligne (17) de l'orifice (18) de sortie des pièces (31) de la borne d'encaissement (5).

3.  Convoyeur pneumatique (1), selon la revendication 2 caractérisé par le fait

    que la vanne (15) avec ouverture et fermeture étanche est une vanne à manchon (15) emmanchée coaxialement sur la ligne (4) l'élément obturateur est constitué d'un manchon souple (19) qui, sous l'effet d'une faible pression périphérique, se referme pour obturer complètement le passage dans la ligne (4) sous-jacente en dépression, pour l'ouverture, une pression équivalente négative est appliquée à la membrane ou manchon souple (19).

4. Convoyeur pneumatique (1), selon la revendication 3 caractérisé par le fait

que la vanne (15) est constituée d'un corps (20) présentant une chambre intérieure (21) ; la membrane tubulaire ou manchon souple (19) traverse cette chambre (21) ; un orifice (22) est aménagé dans la partie centrale du corps (20) pour l'alimentation en air de commande, par l'intermédiaire d'une vanne à trois voies (23).

5. Convoyeur pneumatique selon la revendication 2 caractérisé par le fait

que le moyen de sécurité (16) qui est actionné lors d'un dysfonctionnement dudit dispositif d'introduction (13) est composé d'un moyen de manoeuvre (27,28) qui déplace l'extrémité de la ligne (17) pour la dégager de l'orifice (18) de sortie des pièces (31) de la borne d'encaissement (5).

6. Convoyeur pneumatique selon la revendication 5 caractérisé par le fait

que le moyen de manoeuvre (27,28) est un moteur électrique.

7. Convoyeur pneumatique selon la revendication 5 caractérisé par le fait

que le moyen de manoeuvre (27,28) est la combinaison d'une ventouse électromagnétique (27) et d'un ressort pré-tendu (28).

8. Convoyeur pneumatique (1), selon l'une quelconque des revendications 2 ou 5 caractérisé par le fait

que le moyen de sécurité (16) du dispositif d'introduction (13) est constitué d'un tube doublement cintré dont les deux extrémités sont parallèles mais décalées, une des extrémités aval (26) s'introduit dans la vanne à manchon (15) et y pivote librement ; l'autre extrémité amont (17) est positionnée directement sous l'orifice d'éjection (18) de la borne d'encaissement (5) ; une ventouse électromagnétique (27) maintient l'extrémité (17) sous l'orifice (18) de ladite borne (5) et ce, à l'encontre d'un ressort pré-tendu (28) ; sous tension, ladite ventouse (27) est collée sur sa plaque de fermeture (29) de champ; hors tension, ledit ressort (28) fait pivoter le tube laissant tomber les pièces (31) par gravité dans un coffre de secours (30) directement situé sous le tube, l'alimentation de ladite vanne est commandée par un détecteur d'anomalie.

9. Convoyeur pneumatique (1) selon la revendication 2 caractérisé par le fait

que le moyen de sécurité est assuré par un ensemble de stockage et de comptage constitué de deux éléments principaux, d'un bol de stockage et d'une trémie de comptage et d'éjection des pièces. En action, l'un des deux éléments peut pivoter par rapport à l'autre de manière à permettre l'évacuation des pièces d'un ensemble de stockage ou de comptage vers un coffre de secours.

10. Convoyeur pneumatique (1) selon la revendication 9 caractérisé par le fait

que la trémie qui fait office d'élément de comptage peut pivoter autour d'un axe sous l'action de son propre poids et d'un ressort de traction. Un électro-aimant assure le maintien de la fermeture, tant que la tension est maintenue sur chacune de ses bornes.

11. Convoyeur pneumatique (1) selon l'une quelconque des revendications 9 ou 10 caractérisé par le fait

qu'un moyen faisant office de détecteur de niveau vérifie la saturation du bol de stockage.

12. Convoyeur pneumatique (1) selon la revendication 1 caractérisé par le fait

que le diamètre du tube est 1,7 à 1,8 fois plus grand que le diamètre de la pièce ; le débit d'air est compris entre 8 et 16 caractérisé par le fait

que le diamètre du tube est 1,7 à 1,8 fois plus grand que le diamètre de la pièce ; le débit d'air est compris entre 8 et 16 mètres/seconde.

13. Convoyeur pneumatique (1) selon la revendication 1 caractérisé par le fait

que le moyen (8,9) faisant office de séparateur air/pièces, qui est relié à une turbine d'aspiration (6,7) et une cuve de stockage (10,11), est équipé d'un volume tampon (35) qui assure la séparation des pièces (31) et de l'air en dépression ; le volume tampon (35) a une forme de cône inversé, la grande base (36) recevant ainsi, par cette partie supérieure, une ligne d'aspiration (37) reliée à la turbine aspirante (6 ou 7) et une ou plusieurs lignes principales (2, 3) de transport des pièces (31) ; la sortie de la ligne principale (2,3) conduit les pièces (31), qui tombent par gravité et qui sont amorties par la paroi du volume tampon (35), dans un moyen faisant office de sas pour quitter ce volume tampon (35) sous dépression et par un conduit, ces pièces (31) tombent dans une cuve de stockage (10 ou 11).

14. Convoyeur pneumatique (1) selon la revendication 13 caractérisé par le fait

que la ligne d'aspiration (37), reliée directement à la turbine (6 ou 7), arrive au centre du volume tampon (35) tandis que, les lignes principales (2,3) sont disposées de manière circulaire autour de ladite ligne d'aspiration (37).

**Patentansprüche**

1. Pneumatische Fördereinrichtung (1) für kleine Metallteile (31), insbesondere Geldstücke an Zahlsäulen, mit einer oder mehreren Leitungen, in welchern mittels einer oder mehrerer Ansaugturbinen (6, 7) ein Unterdruck erzeugt wird, wobei jede Leitung an einem Ende die von einer Zahlsäule (5) kommenden Geldstücke (31) aufnimmt und an dem anderen Ende in eine Vorrichtung mündet, die als (Luft/Teile)-Abscheider (8, 9) dient, angeschlossen an eine Ansaugturbine (6, 7) und einen Speicherbehälter (10, 11), dadurch gekennzeichnet, daß

   - eine Hauptleitung (2, 3) an mehrere Zahlsäulen (5) angeschlossen ist,
   - jede Zahlsäule (5) mit einer Einwurfvorrichtung (13) ausgerüstet ist mit Öffnung und dichtem Verschluß bei jedem Durchlauf von Geldstükken (31) in die Hauptleitung (2, 3),
   - jede Leitung (2, 3) als Rohr ausgebildet ist, dessen Durchmesser (A) entsprechend dem Durchmesser (B) der pneumatisch zu fördernden Geldstücke (31) definiert ist, auf eine Weise, die Position eines Geldstücks (31), welches kurzzeitig zum Stillstand kommt, im Rohr labil zu machen, um seine Bewegung zu begünstigen.

2. Pneumatische Fördereinrichtung (1) gemäß Anspruch 1, dadurch gekennzeichnet, daß die Einwurfvorrichtung (13) aus

   - einem Geldstück-Sensor (14), welcher als Zählvorrichtung und Steuervorrichtung eines Ventils (15) mit Öffnung und dichtem Verschluß dient,
   - einem Ventil (15) mit Öffnung und dichtem Verschluß der Leitung nur beim Durchlauf des Geldstücks (31),
   - einer Sicherheitsvorrichtung (16), die bei einer Störung der besagten Einwurfvorrichtung (13) betätigt wird, um durch Drehen das Leitungsende (17) von der Ausgangsöffnung (18) für die Geldstücke (31) an der Zahlsäule (5) abzuschließen, besteht.

3. Pneumatische Fördereinrichtung (1) gemäß Anspruch 2, dadurch gekennzeichnet, daß das Ventil (15) mit Öffnung und dichtem Verschluß als koaxial auf der Leitung (4) angebrachtes Muffenventil (15) ausgebildet ist; das Verschlußelement von einem elastischen Verbindungsstück (19) gebildet wird, welches sich unter der Wirkung eines schwachen peripherischen Drucks schließt und damit den Durchgang in die nachfolgende in Unterdruck befindliche Leitung (4) vollkommen sperrt, und zum Öffnen an der Membrane bzw. dem elastischen Verbindungsstück (19) ein entsprechender negativer Druck erzeugt wird.

4. Pneumatische Fördereinrichtung (1) gemäß Anspruch 3, dadurch gekennzeichnet, daß das Ventil (15) von einem Körper (20) gebildet wird, welcher eine innere Kammer (21) aufweist; die rohrförmige Membrane bzw. das elastische Verbindungsstück (19) diese Kammer (21) durchquert; im mittleren Teil des Körpers (20) eine Öffnung (22) zur Zufuhr von Steuerluft mittels eines 3-Weg-Ventils (23) angeordnet ist.

5. Pneumatische Fördereinrichtung (1) gemäß Anspruch 2, dadurch gekennzeichnet, daß die Sicherheitsvorrichtung (16), welche bei einer Störung der Einwurfvorrichtung (13) betätigt wird, aus einem Antriebsmittel (27, 28) besteht, welches das Leitungsende (17) bewegt, um die Ausgangsöffnung (18) für die Geldstücke (31) an der Zahlsäule (5) abzuschließen.

6. Pneumatische Fördereinrichtung (1) gemäß Anspruch 5, dadurch gekennzeichnet, daß das Antriebsmittel (27, 28) aus einem Elektromotor besteht.

7. Pneumatische Fördereinrichtung (1) gemäß Anspruch 5, dadurch gekennzeichnet, daß das Antriebsmittel (27, 28) aus der Kombination eines Elektromagneten (27) mit einer vorgespannten Feder (28) besteht.

8. Pneumatische Fördereinrichtung (1) gemäß irgendeinem der Ansprüche 2 oder 5, dadurch gekennzeichnet, daß die Sicherheitsvorrichtung (16) der Einwurfvorrichtung (13) aus einem doppelt gebogenen Rohr gebildet wird, dessen beide Enden parallel aber in der Achse versetzt sind, wobei das untere Ende (26) in das Muffenventil (15) mündet und darin frei schwenkbar ist, und das obere Ende (17) direkt unter der Ausgangsöffnung (18) der Zahlsäule (5) angeordnet ist; ein Elektromagnet (27) das Ende (17) unter der Ausgangsöffnung (18) der besagten Zahlsäule (5) gegen die Kraft einer vorgespannten Feder (28) in Position hält; bei anliegender Spannung der besagte Elektromagnet (27) an seine Feldverschlußplatte (29) angezogen ist; bei abgeschalteter Spannung die besagte Feder (28) das Rohr schwenkt, wodurch die Geldstücke (31) durch Schwerkraft in einen direkt unter dem Rohr befindlichen Hilfsbehälter (30) fallen; die Versorgung des besagten Ventils mittels eines Störungsdetektors gesteuert wird.

9. Pneumatische Fördereinrichtung (1) gemäß Anspruch 2, dadurch gekennzeichnet, daß die Sicherheitsvorrichtung durch eine Speicher- und Zähleinheit gebildet wird, welche aus zwei Hauptbauteilen, einem Speicherbehälter und einem Geldzähl- und auswurftrichter, besteht. In Betrieb ist eines der Bauteile in Bezug auf das andere schwenkbar, so daß der Abfluß der Geldstücke aus einer Speicher- bzw. Zähleinheit in einen Hilfsbehälter ermöglicht wird.

10. Pneumatische Fördereinrichtung (1) gemäß Anspruch 9, dadurch gekennzeichnet, daß der als Zählbauteil dienende Trichter unter der Einwirkung seines Eigengewichts und einer Zugfeder um eine Achse schwenkbar ist. Ein Elektromagnet gewährleistet den Halt des Verschlusses solange jede ihrer Zahlsäulen mit Strom versorgt wird.

11. Pneumatische Fördereinrichtung (1) gemäß irgendeinem der Ansprüche 9 oder 10, dadurch gekennzeichnet, daß eine als Füllstanddetektor dienende Vorrichtung die Sättigung des Speicherbehälters überprüft.

12. Pneumatische Fördereinrichtung (1) gemäß Anspruch 1, dadurch gekennzeichnet, daß der Durchmesser des Rohres 1,7 bis 1,8 mal größer ist als der Durchmesser des Geldstücks; der Luftstrom zwischen 8 und 16 Meter/Sekunde beträgt.

13. Pneumatische Fördereinrichtung (1) gemäß Anspruch 1, dadurch gekennzeichnet, daß die als (Luft/Teile)-Abscheider dienende Vorrichtung (8, 9), welche an eine Ansaugturbine (6, 7) und ein Speicherbehälter (10, 11) angeschlossen ist, mit einem Pufferraum (35) ausgestattet ist, der die Trennung der Geldstücke (31) und der in Unterdruck befindlichen Luft gewährleistet; der Pufferraum (35) als kopfstehender Kegel ausgebildet ist, dessen große Deckplatte (36) auf diesem oberen Teil eine an die Ansaugturbine (6, 7) angeschlossene Saugleitung (37) und eine oder mehrere Hauptleitungen (2, 3) zur Beförderung der Geldstücke (31) aufnimmt; wobei der Ausgang der Hauptleitung (2, 3) die durch Schwerkraft fallenden und an der Wandung des Pufferraums (35) aufgefangenen Geldstücke (31) in eine als Schleuse zum Austritt aus dem in Unterdruck befindlichen Pufferraum (35) dienende Vorrichtung führt, von wo aus diese Geldstücke (31) durch einen Schacht in einen Speicherbehälter (10 oder 11) fallen.

14. Pneumatische Fördereinrichtung (1) gemäß Anspruch 13, dadurch gekennzeichnet, daß die direkt an die Turbine (6 oder 7) angeschlossene Ansaugleitung (37) in der Mitte des Pufferraums (35) einmündet, während die Hauptleitungen (2, 3) kreisförmig um die besagte Ansaugleitung (37) angeordnet sind.

## Claims

1. Pneumatic conveyor (1) for small metal parts (31), especially coins from cash terminals, of the type using one or several lines, in which a depression is created by one or several suction turbines (6, 7), each line recovers at one end the coins (31) collected by a cash terminal (5) and at the other end a device acting as separator (air/coins) (8, 9) connected to a suction turbine (6, 7) and a storage vessel (10, 11), characterized in that

   - a same main line (2, 3) is connected to several cash terminals (5),
   - each cash terminal (5) is fitted with an introduction device (13) with opening and tight closure on each passage of coins (31) in the main line (2, 3),
   - each line (2, 3) is a tube whose diameter (A) is defined in relation to the diameter (B) of the coins (31) to be pneumatically conveyed, so as to render unstable the position of a coin (31) which is momentarily stopped in the tube and generate its oscillation.

2. Pneumatic conveyor (1) as per claim 1, characterized in that the introduction device (13) consists of:

   - a coin sensor (14) which acts as a means for counting and as means for controlling a valve (15) with opening and tight closure,
   - a valve (15) with opening and tight closure on the line only during the passage of the coin (31),
   - a safety means (16) which is actuated upon a malfunction of the said introduction device (13) in order to release by rotation the end of the line (17) of the outlet orifice (18) for coins (31) at the cash terminal (5).

3. Pneumatic conveyor (1) as per claim 2, characterized in that valve (15) with opening and tight closure is a sleeve valve (15) coaxially connected on the line (4); the plugging element consists of a flexible sleeve (19) which, under the effect of low peripheral pressure, recloses to completely blank the passage in the underlying depressurized line (4); to open, an equivalent negative pressure is applied to the membrane or flexible sleeve (19).

4. Pneumatic conveyor (1) as per claim 3 characterized in that valve (15) consists of a body (20) with an inner chamber (21); the tubular membrane or flexible sleeve (19) crosses this chamber (21); an opening (22) is arranged in the central part of the body (20) for the control air supply through a 3-way valve (23).

5. Pneumatic conveyor as per claim 2, characterized in that the safety means (16) which is actuated upon a malfunction of the said introduction device (13) consists of an actuating means (27, 28) which moves the end of the line (17) to release it from the outlet orifice (18) for coins (31) at the cash terminal (5).

6. Pneumatic conveyor as per claim 5 characterized in that the actuating means (27, 28) is an electric motor.

7. Pneumatic conveyor as per claim 5 characterized in that the actuating means (27, 28) is the combination of an electromagnetic suction pad (27) and a pre-tensioned spring (28).

8. Pneumatic conveyor (1) as per any one of claims 2 or 5 characterized in that the safety means (16) of the introduction device (13) consists of a dual-bend tube whose two ends are parallel but offset, one of the downstream ends (26) being inserted into the sleeve valve (15) and being free to pivot therein; the other upstream end (17) is positioned directly below the outlet orifice (18) of the cash terminal (5); an electromagnetic suction pad (27) holds the end (17) below the orifice (18) of the said terminal (5) and this in opposition to a pre-tensioned spring (28); when energized, the said suction pad (27) is stuck on the field closure plate (29); when deenergized, the said spring (28) causes the tube to pivot allowing the coins (31) to fall by gravity into a standby box (30) directly situated below the tube, the supply of the said valve being controlled by an anomaly detector.

9. Pneumatic conveyor (1) as per claim 2, characterized in that the safety means is provided by a storage and counting assembly consisting of two main members, a storage bowl and a counting and coin ejection hopper. In operation, one of these two members may pivot relative to the other member so as to allow the coins to be evacuated from a storage or counting assembly into a standby box.

10. Pneumatic conveyor (1) as per claim 9, characterized in that the hopper serving as a counting member may pivot around an axis by action of its own weight and a draw spring. A solenoid will maintain closure as long as a voltage is applied to each of its terminals.

11. Pneumatic conveyor (1) as per any one of claims 9 or 10, characterized in that a means acting as level sensor checks the saturation of the storage bowl.

12. Pneumatic conveyor (1) as per claim 1, characterized in that the diameter of the tube is 1.7 to 1.8 times greater than the diameter of the coin; the air flow is between 8 and 16 m/s.

13. Pneumatic conveyor (1) as per claim 1, characterized in that the means (8, 9) acting as air/coin separator, which is connected to a suction turbine (6, 7) and a storage vessel (10, 11), is equipped with a buffer tank (35) which ensures separation of coins (31) and suction air; the buffer tank (35) has an inverted cone shape, the wide base (36) thus receiving in this upper part a suction line (37) connected to the suction turbine (6 or 7) and one or several main lines (2, 3) for transporting coins (31); the outlet of main line (2, 3) brings the coins (31) which fall by gravity, and the impact of which is absorbed by the walls of the buffer tank (35), into a means which acts as an airlock for leaving this depressurized buffer tank (35) and by a pipe, these coins (31) fall into a storage vessel (10 or 11).

14. Pneumatic conveyor (1) as per claim 13, characterized in that the suction line (37), directly connected to the turbine (6 or 7), reaches the centre of the buffer tank (35) while the main lines (2, 3) are arranged around the said suction line (37).

FIGURE 1

FIGURE 2

18    17

16

14

25

25    25

26

30

4

FIGURE 3    29

27    28

FIGURE 4    28

29

30    30

30    16    27    16

FIGURE 6

FIGURE 7

FIGURE 9

FIGURE 10

FIGURE 11

FIGURE 12

FIGURE 13

FIGURE 15

FIGURE 16

FIGURE 17

FIGURE 18